# EUROPÄISCHE PATENTSCHRIFT

(11) **EP 0 773 371 B1**
(45) Veröffentlichungstag und Bekanntmachung des Hinweises auf die Patenterteilung: **08.07.1998**
(21) Anmeldenummer: 95117553.8
(22) Anmeldetag: 08.11.1995
(51) Int. Cl.: F16B 5/02

(54) **Vorrichtung zum Verbinden von im Abstand zueinander anzuordnenden Bauteilen**
Device for fixing two elements at a distance from each other
Dispositif pour connecter deux pièces à une certaine distance l'une de l'autre

(43) Veröffentlichungstag der Anmeldung: 14.05.1997
(73) Patentinhaber: BENTELER AG, D-33104 Paderborn (DE)
(72) Erfinder: Streubel, H., D-32756 Detmold (DE); Kuhlenkamp, H., D-33104 Paderborn (DE); Klasfauseweh, Dr., D-33334 Gütersloh (DE)
(74) Vertreter: Bockermann, Rolf, Dipl.-Ing.

(56) Entgegenhaltungen:
- US-A- 4 437 784
- US-A- 5 178 501
- US-A- 5 314 280

## Beschreibung

Die Erfindung betrifft eine Vorrichtung zum Verbinden von im Abstand zueinander angeordneten Bauteilen.

Beim abstandsgerechten Verbinden von mit Montageöffnungen versehenen Bauteilen kommen in der Regel Distanzstücke zum Einsatz, die zwischen die zu verbindenden Bauteile eingegliedert sind. Eine solche Vorrichtung zählt durch die EP 0 176 663 A1 zum Stand der Technik. Das Distanzstück ist mit wendelgangförmigen Steigungsflächen ausgestattet. Diesen sind passende Gegensteigungsflächen so zugeordnet, daß sich die Steigungsflächen aufeinander abstützen. Bei der Drehung der Stützflächen zueinander wird das Distanzstück in axialer Richtung ausgerückt. Die Drehbewegung wird über die Verbindungsschraube eingeleitet, wobei das Distanzstück in seine Abstützstellung mitgeschleppt wird.

Die vorstehend beschriebene Bauart hat sich bewährt und wird in der Praxis häufig dann angewandt, wenn zwei Bauteile um ein axiales Maß relativ zueinander bewegt werden sollen. Sie benötigt jedoch eine Reihe von Einzelbauteilen, um den gewünschten Erfolg zu gewährleisten. Die Einzelteile und damit die Gesamtlösung erfordern einen höheren Fertigungsaufwand, der sich negativ auf die Kosten der Vorrichtung auswirkt.

Aus der DE 36 20 005 C1 ist desweiteren eine Vorrichtung zum Einstellen eines ersten Bauteils relativ zu einem zweiten Bauteil bekannt, welche sich einer längenveränderlichen Distanzbuchse bedient. Nachteilig wirkt sich hier aus, daß zunächst die korrekte Länge der Distanzbuchse mit Hilfe eines gesonderten Werkzeugs eingestellt werden muß, bevor das zweite Bauteil montiert und festgelegt werden kann. Stellt sich heraus, daß die Einstellung der Distanzbuchse nicht korrekt gewählt war, ist eine Demontage des zu verbindenden Bauteils und eine Neueinstellung der Distanzbuchse notwendig.

Neben dem Kostenaufwand für die Distanzstücke, welcher sich insbesondere bei der Massenproduktion nachteilig auswirkt, darf nicht unberücksichtigt bleiben, daß die Distanzstücke auch zusätzliches Gewicht bedeuten. Dies ist gerade in solchen Industriezweigen nachteilig, die eine konsequente Leichtbauweise verfolgen, beispielsweise im Kraftfahrzeugbau, da hier das generelle Bestreben nach weiterer Gewichtsreduzierung besteht.

Ferner geht aus der US-A-4 437 784 ein einstellbares Ausgleichsstück hervor, welches zwischen zwei im Abstand zueinander anzuordnenden Bauteilen eingliederbar ist. Das Ausgleichsstück weist zwei seitliche S-förmig geformte Knieabschnitte auf, welche durch Druck verformbar sind. Die Höhe des Ausgleichsstücks ist größer als der gewünschte Abstand zwischen den Bauteilen. Deshalb wird das Ausgleichsstück nach dem Fixieren am ersten Bauteil zunächst auf den erforderlichen Abstand zusammengedrückt. Anschließend kann das zweite Bauteil positioniert und fixiert werden. Hierbei kommt eine selbstschneidende Schraube zum Einsatz, welche Gewindeöffnungen im Ausgleichsstück und im ersten Bauteil herstellt. Hierbei muß das Ausgleichsstück zunächst auf den gewünschten Abstand zusammengedrückt werden, bevor das zweite Bauteil fixiert werden kann.

Der Erfindung liegt daher die Aufgabe zugrunde, eine Vorrichtung zum Verbinden von im Abstand zueinander anzuordnenden Bauteilen zu schaffen, die einfacher herzustellen sowie gewichtsreduziert ist und dennoch eine verläßliche abstandsgerechte Montage gewährleistet.

Erfindungsgemäß wird dieses Ziel durch eine Vorrichtung nach Anspruch 1 erreicht, bei der an einem Bauteil ein Umformbauteil angeordnet ist, der bei der Verschraubung durch das Widerlager axial zur Verbindungsschraube in Richtung auf den anderen Bauteil verlagert wird.

Die erfindungsgemäße Vorrichtung ist insbesondere geeignet für die Verbindung von dünnwandigen Blechbauteilen.

Das Umformelement weist in Richtung zur Längsachse der Verbindungsschraube eine geringe axiale Steifigkeit, aber eine hohe radiale Steifigkeit auf. Die axiale Steifigkeit betrifft die Lastfälle von Zug-Druck zwischen den Bauteilen. Die hohe radiale Steifigkeit wirkt Schubbelastungen zwischen den Bauteilen entgegen.

Das Umformelement ist so gestaltet, daß es sich bei der Montage den jeweils gegebenen Abständen zwischen den Bauteilen anpaßt. Durch das Zusammenwirken der Verbindungsschraube mit dem Widerlager wird das Umformbauteil mit einer Axialkraft beaufschlagt. Dabei entsteht längs der Schraubenachse eine relative Axialverschiebung. Die Axialkraft bewirkt somit ein kontinuierliches Abrollen des Umformbauteils, bis dieses mit seinem dem Widerlager zugeordneten Abschnitt am ersten Bauteil anliegt.

Für den Abrollvorgang ist es vorteilhaft, wenn die plastische Steifigkeit des Umformbauteils in axialer Richtung geringer ist als die elastische Steifigkeit der zu verbindenden Bauteile zueinander. Dadurch lassen sich unerwünschte Relativbewegungen der Bauteile zueinander vermeiden bzw. minimieren.

Die elastische Steifigkeit des Umformbauteils ist üblicherweise materialspezifisch vorgegeben. Die Erzielung der auf den jeweiligen Anwendungsfall angepaßten axialen und radialen Steifigkeit des Umformbauteils kann über dessen Form, Wanddicke und/oder Werkstoff realisiert werden.

Bei der erfindungsgemäßen Vorrichtung bedarf es keines gesonderten Abstandshalters. Damit sind erhebliche Kosteneinsparungen möglich. Desweiteren kann durch die Erfindung eine weitere Gewichtsreduzierung realisiert werden.

Nach den Merkmalen des Anspruch 2 ist der Umformbauteil einstückiger Bestandteil eines der zu verbindenden Bauteile. Der Umformbauteil ist dann direkt aus dem Material des Bauteils herausgeformt. Dies kann tiefziehtechnisch vorgenommen werden. Eine Wanddickenanpassung dieses integrierten Umformbauteils zur Einstellung der erforderlichen axialen und radialen Steifigkeit kann bei der Herstellung während des Tiefziehvorgangs durch gezielte Einstellung des Werkstoffflusses vorgenommen werden.

Eine andere vorteilhafte Ausführungsform der Erfindung sieht nach Anspruch 3 vor, daß der Umformbauteil fügetechnisch mit dem zweiten Bauteil verbunden ist. Diese Ausführungsform bietet sich immer dann an, wenn ein Umformbauteil mit der erforderlichen Steifigkeit, beispielsweise aus materialspezifischen oder fertigungstechnischen Gründen, nicht oder nur mit höherem Aufwand direkt an das Bauteil angeformt werden kann. Das separat ausgeführte Umformbauteil kann durch geeignete Fügeverfahren, beispielsweise mittels Schweißen, Nieten, Kleben, Klemmen und ähnlichem, mit dem zweiten Bauteil verbunden werden.

Weitere Möglichkeiten zur Einstellung der Steifigkeit eines Umformbauteils bestehen in der Variation von Form oder Kontur des Umformbauteils. Denkbar ist auch, daß das Umformbauteil segmentweise ausgeformt ist. Darüberhinaus kann eine Definition der Steifigkeit durch Wahl der geeigneten Wanddicken und des Werkstoffs vorgenommen werden.

Ein für die Praxis besonders gut geeignetes Umformbauteil ist in den Merkmalen des Anspruchs 4 charakterisiert. Der Umformbauteil ist dabei nach Art einer hülsenartigen Einbördelung ausgebildet mit zwei annähernd parallel zueinander verlaufenden Wandabschnitten. Der Boden des Umformbauteils ist zu den Wandabschnitten annähernd quer ausgerichtet. Am Boden ist eine Mutter als Widerlager für die Verbindungsschraube angebracht. Obwohl die Mutter in vorteilhafter Weise festgeschweißt wird, ist die Festlegung auch in anderer Weise möglich. Sie kann beispielsweise genietet, geklemmt oder geklebt sein.

Eine weitere Ausführungsform der Erfindung sieht nach den Merkmalen des Anspruchs 5 vor, daß der Umformbauteil einen etwa parallel zur Achse der Verbindungsschraube ausgerichteten Wandabschnitt mit einer wellenartigen Struktur besitzt. Bei der Montage wird die Wellenstruktur gedehnt bzw. auseinandergezogen. Die Umformung findet ausschließlich in dem Bereich zwischen den beiden zu verbindenden Bauteilen statt.

Zur Erhöhung der Steifigkeit in radialer Richtung ist nach den Merkmalen des Anspruchs 6 ein Stabilisierungselement vorgesehen. Diese Variante kann bei Verbindungen eingesetzt werden, die stärker auf Schub beansprucht werden. Das Stabilisierungselement ist in der Kontur an den Umformbauteil angeglichen. Auch hinsichtlich des Werkstoffs kann das Stabilisierungselement auf den jeweiligen Anwendungsfall angepaßt sein,

In Anwendungsfällen, bei denen die plastische Steifigkeit des Umformbauteils nicht kleiner als die elastische Steifigkeit der zu verbindenden Bauteile gestaltet werden kann, läßt sich die Ausführungsform gemäß Anspruch 7 einsetzen.

Hierbei wird dem freien Ende der Verbindungsschraube ein Abstützlager zugeordnet. In einer einfachen Form kann das Abstützlager durch ein Gegenblech gebildet werden. Bei der Montage wird die Verbindungsschraube in der Mutter geführt, bis das freie Ende der Verbindungsschraube das Gegenblech berührt. Bei der Fortsetzung der Schraubbewegung werden das Gegenblech und der Umformbauteil gegeneinander verspannt. Es kommt so zu einer Spreizung. Das Widerlager wird dadurch auf das erste Blech zu bewegt. Das Gegenblech ist hinsichtlich Werkstoff, Geometrie und Dicke derart an die herzustellende Verbindung angepaßt, daß dieses von der Verbindungsschraube durchstoßen wird, wenn der Boden des Umformbauteils am ersten Bauteil anliegt. Hierzu kann die Verbindungsschraube mit einer speziell ausgebildeten Spitze versehen sein. Zur Unterstützung dieses Vorgangs kann das Gegenblech auch entsprechend vorgeformt sein, beispielsweise durch eine Bohrung, eine Einkerbung oder ähnliches.

Das Umformbauteil wird auf diese Weise in die Endposition der Montage gebracht, ohne daß es zu Relativverschiebungen zwischen den zu verbindenden Bauteilen kommt. Die Kraft, die zur Verlagerung des Widerlagers und damit zum Abrollen des Umformbauteils erforderlich ist, wirkt nur zwischen dem Gegenblech und dem Umformbauteil.

Im folgenden ist die Erfindung anhand der in den Zeichnungen dargestellten Ausführungsbeispielen näher beschrieben. Das grundlegende Prinzip wird mit Bezug auf die Figuren 1 und 2 erläutert, wobei jeweils in der linken Bildhälfte die Situation vor der Montage und in der rechten Bildhälfte die Situation nach der Montage dargestellt ist. In den Figuren 3 bis 6 sind vier weitere Ausführungsformen der erfindungsgemäßen Vorrichtung näher erläutert.

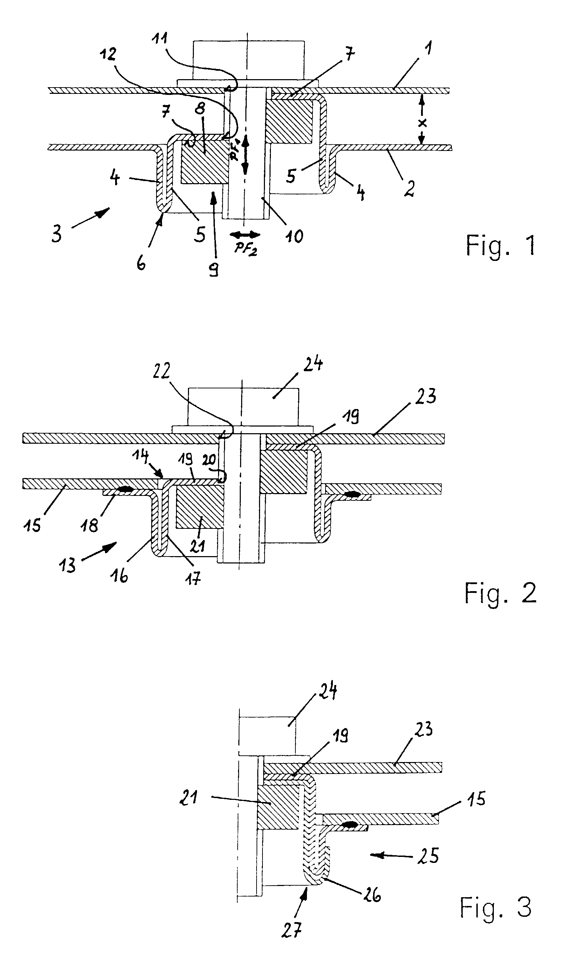

In der Figur 1 ist eine Vorrichtung zum Verbinden von in einem Abstand x zueinander liegenden Blechen 1 und 2 dargestellt.

Am Blech 2 ist ein Umformbauteil 3 angeformt. Der Umformbauteil 3 ist napfartig gestaltet mit zwei annähernd parallel verlaufenden Wandabschnitten 4 und 5, die über die Faltung 6 ineinander übergehen. Die axiale Steifigkeit des Umformbauteils 3 in Pfeilrichtung PF₁ ist gegenüber der radialen Steifigkeit in Pfeilrichtung PF₂ vergleichsweise gering.

Am Boden 7 des Umformbauteils 3 ist eine Mutter 8 als Widerlager 9 für eine Verbindungsschraube 10 festgelegt. Mit Hilfe der Verbindungsschraube 10 und der Mutter 8 werden die Bleche 1 und 2 verpannt. Hierzu wird die Verbindungsschraube 10 durch eine Montageöffnung 11 im ersten Blech 1 und eine Montageöffnung 12 des zweiten Blechs 2 geführt, so daß die Verbindungsschraube 10 in die Mutter 8 eingeschraubt werden kann. Durch das Zusammenwirken der Verbindungsschraube 10 mit der Mutter 8 wird das Umformbauteil 3 unter Verlagerung der Mutter 8 mit einer Axialkraft beaufschlagt. Diese Axialkraft sorgt für ein kontinuierliches Abrollen des Umformbauteils 3, bis dieses mit seinem Boden 7 am Blech 1 anliegt (Figur 1, rechte Bildhälfte). Die sich hierbei ergebende relative Verlängerung des inneren Wandabschnitts 5 wird in einer entsprechenden Verkürzung des äußeren Wandabschnitts 5 ausgeglichen.

Voraussetzung für dieses Abrollen des Umformbauteils 3 ist, daß dessen plastische axiale Steifigkeit geringer ist als die elastische Steifigkeit der zu verbindenden Bleche 1 und 2 zueinander. Dies kann durch eine gezielte Anpassung der Wanddicke des Umformbauteils 3 auf den jeweiligen Anwendungsfall bzw. Montagefall erreicht werden.

Bei der durch Figur 2 erläuterten Vorrichtung ist ein Umformbauteil 13 als separater Einzelteil ausgebildet. Der Einsatz des Umformbauteils 13 bietet sich in solchen Fällen an, bei denen ein Umformbauteil mit der gewünschten Steifigkeit nicht an einem der zu verbindenden Bauteile selbst ausgeformt werden kann.

Das Umformbauteil 13 ist in einer Montageöffnung 14 am in Bildebene gesehen unteren Blech 15 plaziert (Figur 2, linke Bildhälfte). Mit dem radial zu den Wandabschnitten 16, 17 ausgerichteten Schenkelabschnitt 18 ist der Umformbauteil 13 am Blech 15 festgeschweißt.

Im Boden 19 ist eine Öffnung 20 vorhanden, zu der fluchtend die Mutter 21 befestigt ist. Durch eine Montageöffnung 22 im oberen Blech 23 wird die Verbindungsschraube 24 geführt und in die Mutter 21 geschraubt. Hierdurch wird wiederum der kontinuierliche Abrollvorgang des Umformbauteils 13 bewirkt, bis der Boden 19 auf der Unterseite des Blechs 23 anliegt.

Aus der Figur 3 geht eine Vorrichtung hervor, bei der einem Umformbauteil 25 eine Hülse 26 als Stabilisierungselement 27 zugeordnet ist. Hierdurch wird eine Erhöhung der Steifigkeit in radialer Richtung erreicht. Das Stabilisierungselement 27 ist in seiner Kontur an den Umformbauteil 25 angepaßt und durch entsprechende Abstimmung der Wanddicke und des Werkstoffs auf die erforderliche Steifigkeit abgestimmt.

Ansonsten entspricht die Darstellung der Figur 3 derjenigen der Figur 2, so daß entsprechende Bauteile mit gleichen Bezugszeichen versehen sind.

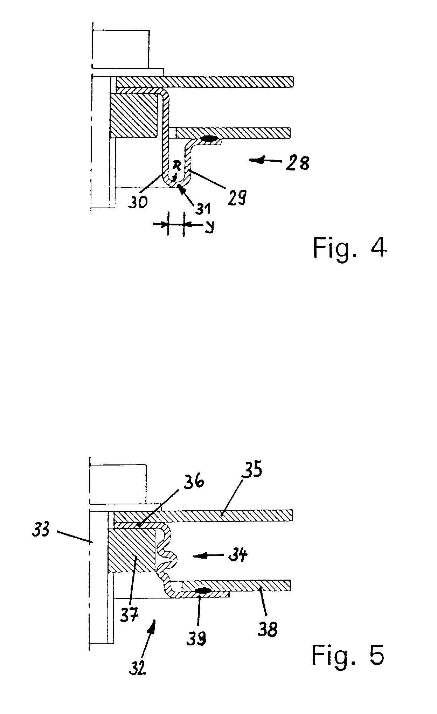

Figur 4 zeigt eine Möglichkeit, die radiale und plastische axiale Steifigkeit eines Umformbauteils 28 durch eine Abwandlung in der Form zu variieren. Dies geschieht bei dem Umformbauteil 28 dadurch, daß der Abstand y zwischen den Wandabschnitten 29, 30 größer gewählt ist als beispielsweise bei dem Umformbauteil 3 gemäß der Figur 1. Mit der Vergrößerung des Abstands y ergibt sich im Scheitelbereich 31 zwischen den Wandabschnitten 29, 30 eine Vergrößerung des Krümmungsradius R.

Aus der Figur 5 geht eine Vorrichtung hervor mit einem Umformbauteil 32, welcher einen etwa parallel zur Achse der Verbindungsschraube 33 ausgerichteten Wandabschnitt 34 mit einer wellenartigen Struktur besitzt.

Der Umformbauteil 32 weist desweiteren einen parallel zum Blech 35 ausgerichteten Boden 36 zur Anlage des Widerlagers 37 auf. Am Blech 38 ist der Umformbauteil 32 mit seinem sich parallel zum Blech 38 erstreckenden Rand 39 schweißtechnisch festgelegt.

Bei der Montage wird die wellenartige Struktur des Wandabschnitts 34 auseinandergezogen, wobei die Umformung ausschließlich zwischen den Blechen 35 und 38 stattfindet.

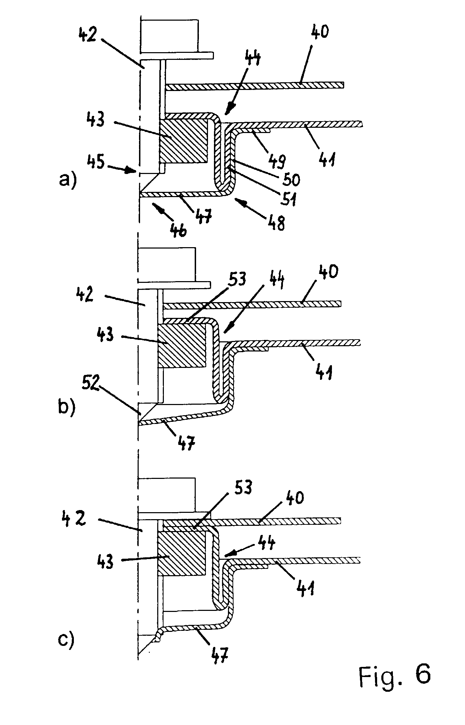

Anhand der Figur 6 ist eine Ausführungsform beschrieben, welche in Anwendungsfällen zum Einsatz gelangen kann, bei denen die plastische Steifigkeit eines Umformbauteils nicht kleiner als die elastische Steifigkeit der zu verbindenden Bauteile gestaltet werden kann.

Die Bleche 40, 41 werden gemäß der Erfindung mittels einer Verbindungsschraube 42 und der Mutter 43 miteinander verspannt, wobei am Blech 41 ein Umformbauteil 44 in der beschriebenen Weise angeformt ist.

Dem freien Ende 45 der Verbindungsschraube 42 ist ein Abstützlager 46 in Form eines Gegenblechs 47 zugeordnet. Das Gegenblech 47 bildet Bestandteil eines topfartig ausgebildeten Blechbauteils 48, der auf den Umformbauteil 44 gesetzt ist. Mit seinem umlaufenden Rand 49 ist der Blechbauteil 48 am Blech 41 festgelegt. Der axial zur Verbindungsschraube 42 ausgerichtete Wandabschnitt 50 des Blechbauteils 48 liegt am Wandabschnitt 51 des Umformbauteils 44 an.

Bei der Montage wird die Verbindungsschraube 42 in die Mutter 43 geschraubt, bis sie das Gegenblech 47 berührt (Figur 6a). Bei der Fortsetzung der Schraubbewegung werden der Umformbauteil 44 und das Gegenblech 47 gegeneinander verspannt bzw. gespreizt (Figur 6b). Die Mutter 43 wird hierdurch auf das Blech 40 zu bewegt, wobei der Umformbauteil 44 axial abgerollt wird. Während dieses Vorgangs wird die Dicke des Gegenblechs 47 durch die Spitze 52 der Verbindungsschraube 42 örtlich verringert. Das Gegenblech 47 ist hinsichtlich Werkstoff, Geometrie und Dicke so ausgebildet, daß es von der Verbindungsschraube 42 durchstoßen wird, wenn der Boden 53 des Umformbauteils 44 am oberen Blech 40 anliegt (Figur 6c).

In der zuvor beschriebenen Weise kann der Umformbauteil 44 in seine Montagestellung überführt werden, ohne daß es zu Relativverschiebungen zwischen den Blechen 40 und 41 kommt. Die notwendige Kraft zur Verschiebung des Bodens 53 gegen das obere Blech 40 wirkt nur zwischen dem Gegenblech 47 und dem Umformbauteil 44.

### Bezugszeichenaufstellung

- 1 -: Blech
- 2 -: Blech
- 3 -: Umformbauteil
- 4 -: Wandabschnitt
- 5 -: Wandabschnitt
- 6 -: Faltung
- 7 -: Boden
- 8 -: Mutter
- 9 -: Widerlager
- 10 -: Verbindungsschraube
- 11 -: Montageöffnung in 1
- 12 -: Montageöffnung in 2
- 13 -: Umformbauteil
- 14 -: Montageöffnung in 15
- 15 -: Blech
- 16 -: Wandabschnitt
- 17 -: Wandabschnitt
- 18 -: Schenkelabschnitt
- 19 -: Boden v.13
- 20 -: Öffnung
- 21 -: Mutter
- 22 -: Montageöffnung
- 23 -: Blech
- 24 -: Verbindungsschraube
- 25 -: Umformbauteil
- 26 -: Hülse
- 27 -: Stabilisierungselement
- 28 -: Umformbauteil
- 29 -: Wandabschnitt
- 30 -: Wandabschnitt
- 31 -: Scheitel
- 32 -: Umformbauteil
- 33 -: Verbindungsschraube
- 34 -: Wandabschnitt
- 35 -: Blech
- 36 -: Boden
- 37 -: Widerlager
- 38 -: Blech
- 39 -: Rand
- 40 -: Blech
- 41 -: Blech
- 42 -: Verbindungsschraube
- 43 -: Mutter
- 44 -: Umformbauteil
- 45 -: freies Ende v. 42
- 46 -: Abstützlager
- 47 -: Gegenblech
- 48 -: Blechbauteil
- 49 -: Rand v. 48
- 50 -: Wandabschnitt v. 48
- 51 -: Eandabschnitt v. 44
- 52 -: Spitze v. 42
- 53 -: Boden v. 44

- PF₁-: Pfeil
- PF₂-: Pfeil
- R -: Krümmungsradius
- x -: Abstand
- y -: Abstand

## Patentansprüche

1. Vorrichtung mit einem ersten Bauteil (1,23,35,40) und im Abstand dazu angeordneten zweiten Bauteil (2,15,38,41), wobei die Bauteile mit Montageöffnungen (11, 12, 14, 22) versehenen sind (1, 2, 15, 23, 35, 38, 40, 41) und mit einer Verbindungsschraube (10, 24, 33, 42) und dieser zugeordnetem Widerlager (8, 9, 21, 37, 43), wobei am zweiten Bauteil (2, 15, 38, 41) ein bei der Verschraubung durch das Widerlager (8, 9, 21, 37, 43) axial zur Verbindungsschraube (10, 24, 33, 42) in Richtung auf den ersten Bauteil (1, 23, 35, 40) verlagerbarer Umformbares Bauteil (3, 13, 25, 28, 32, 44) angeordnet ist.

2. Vorrichtung nach Anspruch 1, **dadurch gekennzeichnet,** daß der Umformbauteil (3, 44) einstückiger Bestandteil des zweiten Bauteils (2, 41) ist.

3. Vorrichtung nach Anspruch 1, **dadurch gekennzeichnet,** daß der Umformbauteil (13, 25, 28, 32) fügetechnisch mit dem zweiten Bauteil (15, 38) verbunden ist.

4. Vorrichtung nach einem der Ansprüche 1 bis 3, **dadurch gekennzeichnet,** daß der Umformbauteil (3, 13) zwei annähernd parallel zueinander sowie zur Achse der Verbindungsschraube (10, 24) verlaufende Wandabschnitte (4, 5, 16, 17) und einen annähernd quer zu dem Wandabschnitt (5, 17) ausgerichteten Boden (7, 19) zur Anlage des in Form einer Mutter (8, 21) ausgebildeten Widerlagers umfaßt.

5. Vorrichtung nach einem der Ansprüche 1 bis 3, **dadurch gekennzeichnet,** daß der Umformbauteil (32) einen etwa parallel zur Achse der Verbindungsschraube (33) ausgerichteten Wandabschnitt (34) mit einer wellenartigen Struktur besitzt.

6. Vorrichtung nach einem der Ansprüche 1 bis 5, **dadurch gekennzeichnet,** daß dem Umformbauteil (25) ein an seine Kontur angeglichenes Stabilisierungselement (27) zugeordnet ist.

7. Vorrichtung nach einem der Ansprüche 1 bis 6, **dadurch gekennzeichnet,** daß dem freien Ende (45) der Verbindungsschraube (42) ein Abstützlager (46) zugeordnet ist.

## Claims

1. A device comprising a first component (1, 23, 35, 40) and, spaced therefrom, a second component (2, 15, 38, 41), the components being provided with assembly openings (11, 12, 14, 22)(1, 2, 15, 23, 35, 38, 40, 41) and comprising a connecting screw (10, 24, 33, 42) and an abutment (8, 9, 21, 37, 43) associated therewith, wherein there is disposed on the second component (2, 15, 38, 41) a deformable component (3, 13, 25, 28, 32, 44) which, during the screwing through the abutment (8, 9, 21, 37, 43), is shiftable axially to the connecting screw (10, 24, 33, 42) in the direction of the first component (1, 23, 35, 40).

2. A device according to claim 1, characterised in that the deformable component (3, 44) is an integral part of the second component (2, 41).

3. A device according to claim 1, characterised in that the deformable component (13, 25, 28, 32) is connected to the second component (15, 38) by jointing techniques.

4. A device according to any one of claims 1 to 3, characterised in that the deformable part (3, 13) comprises two wall portions (4, 5, 16, 17) which extends substantially parallel to one another and to the axis of the connecting screw (10, 24) and a base (7, 19) disposed substantially transversely of the wall portion (5, 17) for the contact of the abutment, which latter is constructed in the form of a nut (8, 21).

5. A device according to any one of claims 1 to 3, characterised in that the deformable component (32) has a wall portion (34) having a corrugated structure and extending substantially parallel to the axis of the connecting screw (33).

6. A device according to any one of claims 1 to 5, characterised in that the deformable component (25) is associated with a stabilising element (27) adapted to its contour.

7. A device according to any one of claims 1 to 6, characterised in that the free end (45) of the connecting screw (42) is associated with a support bearing (46).

## Revendications

1. Dispositif présentant un premier élément de construction (1, 23, 35, 40) et disposé à une certaine distance de celui-ci, un second élément de construction (2, 15, 38, 41), les éléments de construction (1, 2, 15, 23, 35, 38, 40, 41) étant munis d'ouvertures de montage (11, 12, 14, 22) et d'une vis de raccordement (10, 24, 33, 42) et une butée affectée à celle-ci (8, 9, 21, 37, 43), sur le deuxième élément de construction (2, 15, 38, 41) étant disposé un élément de construction déformable et déplaçable lors du vissage par la butée (8, 9, 21, 37, 43) axialement par rapport à la vis de raccordement (10, 24, 33, 42) dans la direction du premier élément de construction (1, 23, 35, 40).

2. Dispositif selon la revendication 1, caractérisé en ce que l'élément de construction déformable (3, 44) est un élément solidaire du deuxième élément de construction (2, 41).

3. Dispositif selon la revendication 1, caractérisé en ce que l'élément de construction déformable (13, 25, 28, 32) est raccordé au moyen d'une technique d'assemblage au second élément de construction (15, 38).

4. Dispositif selon l'une des revendications 1 à 3, caractérisé en ce que l'élément de construction déformable (3, 13) comporte deux sections de parois (4, 5, 16, 17) s'étendant approximativement parallèlement entre elles ainsi que par rapport à l'axe de la vis de raccordement (10, 24) et un fond (7, 19) dirigé approximativement transversalement par rapport à la section de paroi (5, 17) pour la mise en place de la butée conçue sous forme d'un écrou (8, 21).

5. Dispositif selon l'une des revendications 1 à 3, caractérisé en ce que l'élément de construction déformable (32) possède une section de paroi orientée sensiblement parallèlement à l'axe de la vis de raccordement (33) avec une structure ondulée.

6. Dispositif selon l'une des revendications 1 à 5, caractérisé en ce qu'un élément de stabilisation (27) est affecté à l'élément de construction déformable (25) et adapté à son contour.

7. Dispositif selon l'une des revendications 1 à 6, caractérisé en ce qu'un élément d'appui (46) est affecté à l'extrémité libre (45) de la vis de raccordement (42).
